(19) Europäisches Patentamt
European Patent Office
Office européen des brevets

(11) **EP 1 881 304 B1**

(12) **EUROPEAN PATENT SPECIFICATION**

(45) Date of publication and mention
of the grant of the patent:
**25.01.2012 Bulletin 2012/04**

(51) Int Cl.:
*G01F 3/22* (2006.01)    *G01F 1/66* (2006.01)
*G01F 15/075* (2006.01)

(21) Application number: **06746079.0**

(22) Date of filing: **08.05.2006**

(86) International application number:
**PCT/JP2006/309248**

(87) International publication number:
**WO 2006/121004 (16.11.2006 Gazette 2006/46)**

(54) **FLOW RATE MEASUREMENT DEVICE**

DURCHFLUSSMESSVORRICHTUNG

DISPOSITIF DE MESURE DU DEBIT

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.05.2005 JP 2005135978**
**20.07.2005 JP 2005209719**

(43) Date of publication of application:
**23.01.2008 Bulletin 2008/04**

(73) Proprietor: **Panasonic Corporation**
**Kadoma-shi**
**Osaka 571-8501 (JP)**

(72) Inventors:
• **MIYATA, Hajime**
**Osaka 540-6207 (JP)**
• **UMEKAGE, Yasuhiro**
**Osaka 540-6207 (JP)**

(74) Representative: **Pautex Schneider, Nicole Véronique et al**
**Novagraaf International SA**
**Chemin de l'Echo 3**
**1213 Onex (CH)**

(56) References cited:
GB-A- 2 300 721    JP-A- 05 264 316
JP-A- 2001 330 491    JP-A- 2002 107 198
JP-A- 2002 174 542    JP-A- 2003 149 027
JP-A- 2003 149 075    JP-A- 2003 194 331
US-A- 5 369 598    US-B1- 6 625 549

**Description**

TECHNICAL FIELD

The present invention relates to a flow rate measurement device as defined in claim 1.

BACKGROUND ART

An example of a conventional flow rate measurement device of this kind is disclosed in, for example, Unexamined Japanese Patent Publication No. 2007-71421.

Generally, a gas meter including a gas flow meter is attached at an entrance of a gas supply line in each house. In the case of determining rates for respective appliances in a conventional gas meter, a plurality of integrators connected to the gas meter are used to calculate an integrated flow rate in the case where gas is used for predetermined time and an integrated value in the case where flow rate in a specific range is used, that is, to calculate flow rate by time zone and flow rate by flow rate zone. Based on the integrated value, a bill system is determined.

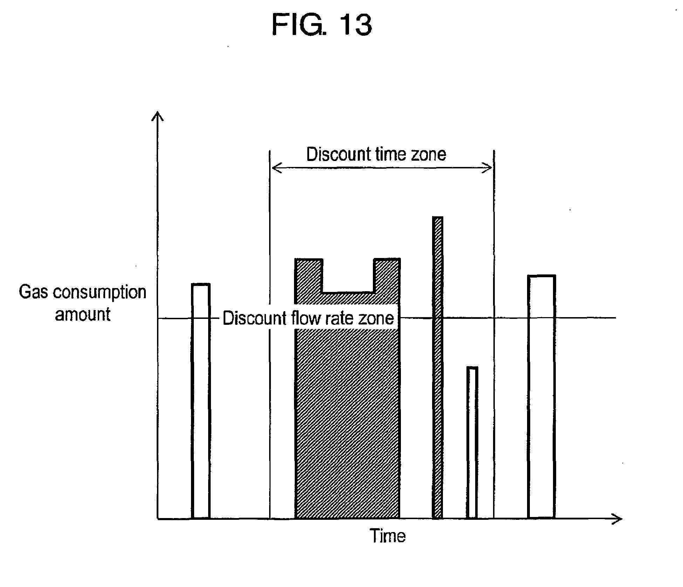

An example of the bill system will be described with reference to FIG. 13. A predetermined discount flow rate zone and a predetermined discount time zone are set in advance, and the gas rate in the discount flow rate zone and the discount time zone is to be discounted. That is, the gas rate in the hatched portion in FIG. 13 is discounted. In this method, however, the determination of an appliance is vague, and it is difficult to make bill setting such as charging to a specific appliance, which is more easily understood by the consumers. Therefore, a method for determining a specific appliance is proposed as shown in Japanese Patent Application No. 2003-149027.

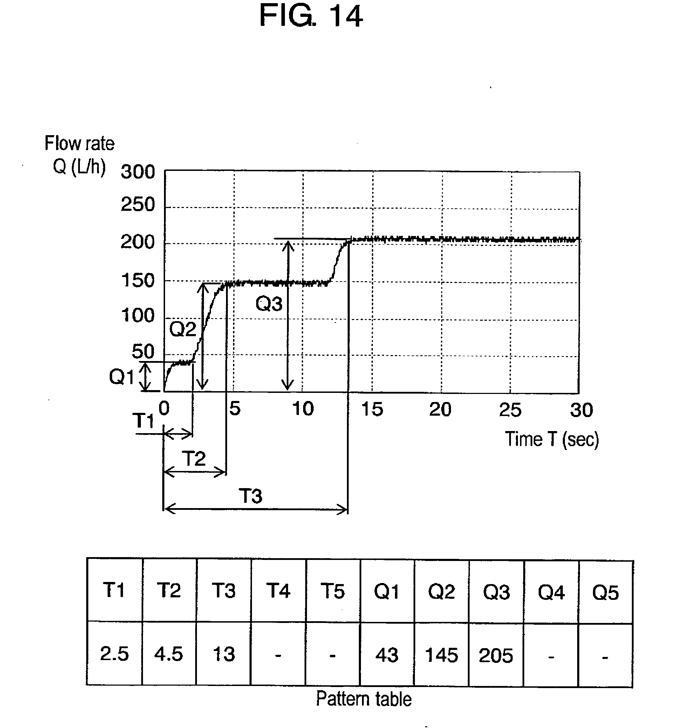

The operation of a flow rate measurement device of this kind will be described with reference to FIG. 14. FIG. 14 shows a gas flow rate change pattern at the time of start of a certain gas appliance and a reference value (pattern table) for performing pattern matching based on the gas flow rate change pattern. For a single gas appliance, the pattern tables are necessary for the number of a series of gas flow rate change patterns generated accompanying combustion control of the gas appliance. In addition, pattern tables of the number of gas appliances used in each house are necessary. While comparing a change in a flow rate value measured by a flow rate measuring device of a gas meter and the pattern tables at every time, matching is extracted and an appliance is specified.

In the conventional configuration, however, a series of gas flow patterns have to be stored for determining an appliance. In the case where the number of gas appliances used is large, however, as the number of gas appliances used increases, the data amount increases, and it takes time for the determination by comparison. Further, an apparatus for the determination is expensive, so that the cost of a gas meter itself also increases. In addition, in the case where a plurality of appliances are simultaneously used, gas flow patterns have to be prepared on assumption of combinations of the plurality of appliances used. Since the amount for the combinations is enormous, there is a problem such that it is very difficult to discriminate a plurality of appliances from each other.

Further prior art is discussed in US patent 6 625 549.

DISCLOSURE OF THE INVENTION

A flow rate measurement device of the present invention includes: a flow rate measuring instrument for measuring flow rate in predetermined time intervals; a computing unit for obtaining a differential value of flow rate values output from the flow rate measuring instrument; an appliance information storage; and a unit for comparing the differential value calculated by the computing unit with a start determination value registered in the appliance information storage and determining use of an appliance connected downstream of the flow rate measuring instrument.

The above-described configuration can provide a flow rate measurement device capable of discriminating a plurality of appliances from each other in short time.

BRIEF DESCRIPTION OF THE DRAWINGS

FIG. 1 is a configuration diagram of a flow rate measurement device in a first embodiment of the present invention.

FIG. 2 is a configuration diagram of a flow rate measurement unit in the flow rate measurement device shown in FIG. 1.

FIG. 3 is a flowchart of discriminating operation in the flow rate measurement device shown in FIG. 1.

FIG. 4 is a diagram of flow rate and computation values in the flow rate measurement device shown in FIG. 1.

FIG. 5 is another diagram of flow rate and computation values in the flow rate measurement device shown in FIG. 1.

FIG. 6 is a flowchart of discriminating operation in a second embodiment of the present invention.

FIG. 7 is another flowchart of the discriminating operation in the second embodiment of the invention.

FIG. 8 is a configuration diagram of a flow rate measurement device in a third embodiment of the invention.

FIG. 9 is a diagram of flow rate in the flow rate measurement device shown in FIG. 8.

FIG. 10 is another diagram of flow rate in the flow rate measurement device shown in FIG. 8.

FIG. 11 is a diagram of flow rate in a fourth embodiment of the invention.

FIG. 12 is a configuration diagram of a flow rate measurement device in the fourth embodiment of the invention.

FIG. 13 is a conceptual diagram of a discriminating method in a conventional flow rate measurement device.

FIG. 14 is a data configuration diagram of the discriminating method in the conventional flow rate measurement device.

REFERENCE MARKS IN THE DRAWINGS

| 1 | flow rate measurement device |
| 2 | gas shutoff valve |
| 3 | flow rate measuring instrument |
| 4 | display unit |
| 5 | seismoscope |
| 6 | computing unit |
| 7 | appliance information storage |
| 8 | appliance discriminating unit |
| 9 | control circuit |
| 10 | measurement passage |
| 11, 12 | ultrasonic transmitter/receiver |
| 13 | appliance registering unit |
| 14 | flow rate information storage |
| 15 | flow-rate-by-appliance calculator |
| 16 | information compressor |

PREFERRED EMBODIMENTS FOR CARRYING OUT OF THE INVENTION

Embodiments of the present invention will be described hereinbelow with reference to the drawings.

First Embodiment

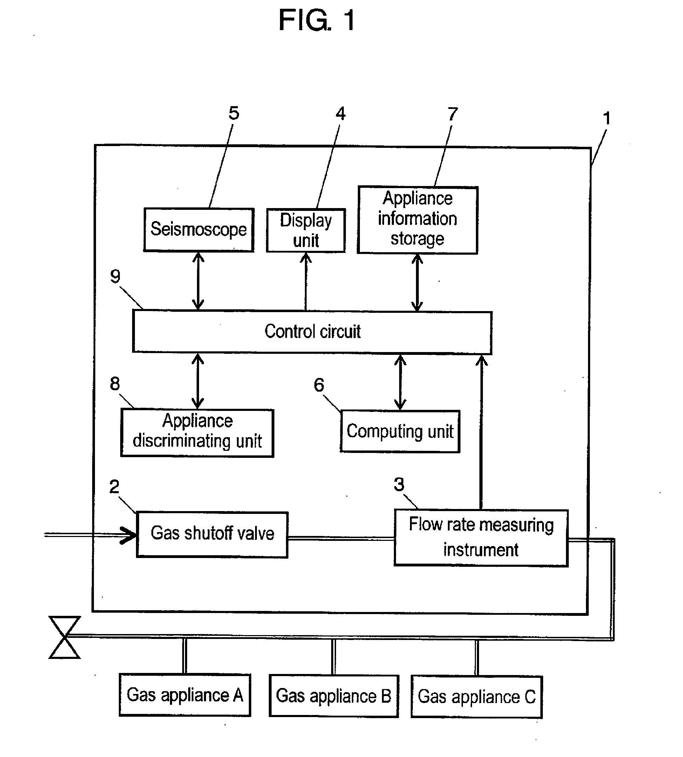

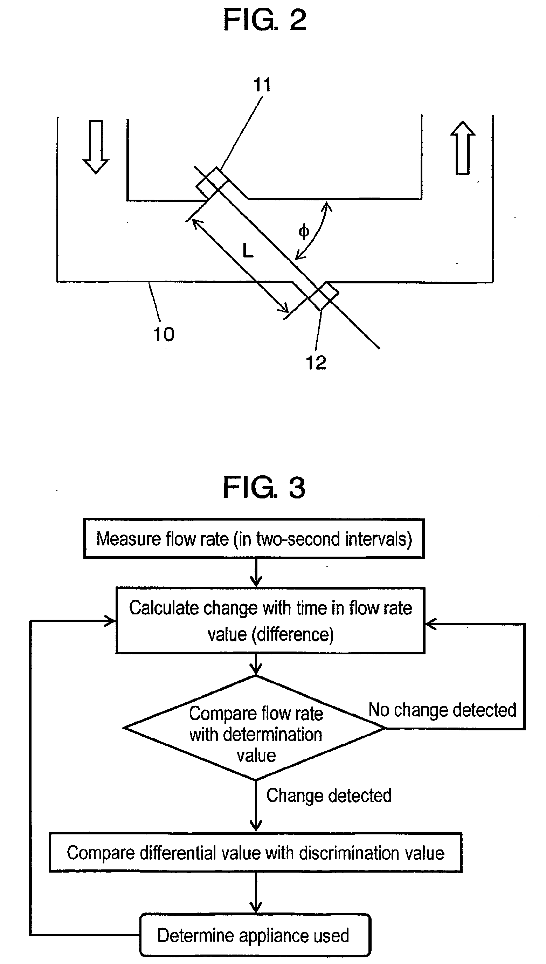

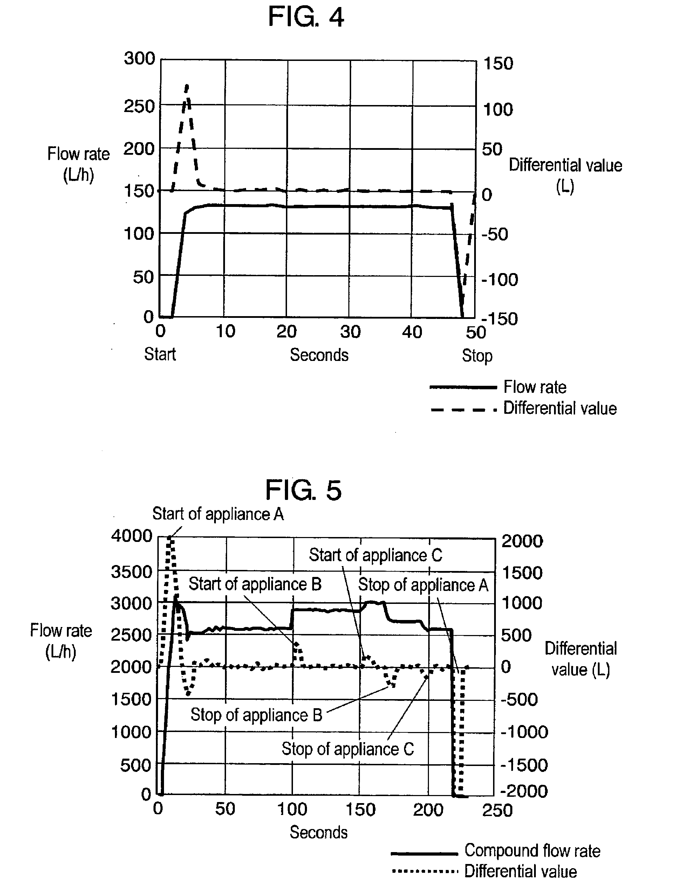

FIG. 1 is a configuration diagram of a flow rate measurement device in a first embodiment of the present invention. FIG. 2 is a configuration diagram of a flow rate measurement unit in the flow rate measurement device shown in FIG. 1. FIG. 3 is a flowchart of discriminating operation in the flow rate measurement device shown in FIG. 1. FIG. 4 is a diagram of flow rate and computation values in the flow rate measurement device shown in FIG. 1. FIG. 5 is another diagram of flow rate and computation values in the flow rate measurement device shown in FIG. 1.

In FIG. 1, the flow rate measurement device of the first embodiment has: flow rate measuring instrument 3 for measuring flow rate in predetermined time intervals; computing unit 6 for obtaining the differential value of the flow rate value output from flow rate measuring instrument 3; appliance information storage 7; and appliance discriminating unit 8 for discriminating use of an appliance connected on the downstream side of flow rate measuring instrument 3 by comparing the differential value calculated by computing unit 6 with a start determination registered in appliance information storage 7.

The configuration of the flow rate measurement device of the first embodiment will be described more specifically by using FIG. 1. In FIG. 1, flow rate measurement device 1 is provided in some midpoint of a gas supply pipe. To the pipe on the downstream side, one or more gas appliances, specifically, gas appliance A, gas appliance B, and gas appliance C set in customers' houses are connected.

Flow rate measurement device 1 includes gas shutoff valve 2 and flow rate measuring instrument 3 provided in a gas passage connected to the gas pipe. Flow rate measurement device 1 also includes display unit 4 for displaying gas flow rate by performing computing process on a signal from flow rate measuring instrument 3, and seismoscope 5 for detecting quake such as earthquake. To discriminate an appliance related to the invention, flow rate measurement device 1 also includes computing unit 6, appliance information storage 7, appliance discriminating unit 8, control circuit 9 for controlling the operation of seismoscope 5, appliance determination, maintenance function, or the like in a centralized manner, and a battery (not shown) as a power source of the components.

In appliance information storage 7, a start determination value as a comparison determination value used to determine whether a flow rate change occurs or not, and application determination value as flow rate information on start of combustion of each gas appliance are recorded. As appliance information storage 7 for holding recorded data, a semiconductor memory is used in the first embodiment. As long as additional recording and rewriting can be performed, a magnetic recording medium or other devices can be employed.

As flow rate measuring instrument 3 of flow rate measurement device 1 of the embodiment, an ultrasonic flow meter (ultrasonic measuring instrument) as an instantaneous flow rate measurement device is used. As the measuring method, other flow rate measuring methods can be also used as long as a method can perform consecutive measurement in predetermined cycles in short time such as a fluidic method.

The operation of flow rate measurement device 1 of the embodiment will be described below. First, ultrasonic flow measurement will be described with reference to FIG. 2. In FIG. 2, the section of measurement passage 10 is rectangular. On the wall face formed at right angle with the gas flow direction of measurement passage 10, a pair of ultrasonic transmitters/receivers 11 and 12 is attached so as to diagonally face each other over measurement passage 10 at angle φ on the upstream side and the downstream side of the passage. Ultrasonic transmitters/receivers 11 and 12 transmit/receive ultrasonic waves alternately to/from each other, measure the difference in propagation of the ultrasonic waves in the forward direction and the reverse direction with respect to the flow of fluid at predetermined intervals, and output the measured difference as a propagation time difference signal. A calculating machine (not shown) receives the propagation time difference signal and calculates the flow velocity and flow rate of the fluid to be measured.

The arithmetic expression is as follows. In FIG. 2, L denotes measurement distance. When t1 denotes transmission time from the upstream and t2 denotes transmission time from the downstream, flow velocity V is expressed as follows.

$$V = (L/2cos\phi) \times (1/t1 - 1/t2)$$

A time interval of measurement can be set in the range where ultrasonic wave can be transmitted/received. In the first embodiment, measurement is performed at two-second intervals. The time interval can be further shortened in measurement theory. Since there is a gas appliance which starts in time shorter than two seconds, when the measurement time interval is set shorter, it is advantageous from the viewpoint of instantaneously discriminating an appliance. However, when the measurement interval is shortened, a problem occurs such that exhaustion of the battery increases. When the measurement interval equivalent to that of a diaphragm type used in a conventional gas meter becomes an interval of the two-digit order, it becomes difficult to determine an appliance based on the difference in the flow rate changes in the algorithm in the first embodiment. Therefore, in the first embodiment, measurement is performed every two seconds as balanced time from the viewpoints of cost and appliance discrimination performance.

Next, the procedure of determining an operation state of a gas appliance will be described with reference to FIG. 3. Flow rate measurement device 1 measures gas flow rate every two seconds as described above, sends the data to computing unit 6, differentiates the flow rate value, and outputs the resultant value as differential data of the flow rate values in the two-second intervals.

The differential data is sequentially transmitted to appliance discriminating unit 8 and is compared with a start determination value registered in appliance information storage 7. When the differential value exceeds the comparison determination value, it is determined that the state of the gas appliance changes. When a change is detected, to determine the state of each of the gas appliances, appliance discriminating unit 8 compares the data with change values by state in each of the gas appliances registered in appliance information storage 7, thereby discriminating the appliance used.

FIG. 4 shows a change in the gas flow rate and a change in the differential value when a gas appliance is actually used. In the graph of FIG. 4, the solid line expresses the gas flow rate measured by the flow rate measuring instrument, and a broken line expresses the differential value at that time, that is, a differential value of every two seconds. When a gas appliance starts, the differential value is expressed so as to have a peak on the positive side. When the gas appliance stops, the differential value is expressed so as to have a peak on the negative side.

FIG. 5 is a graph showing the flow rate value and the differential value when three appliances A, B, and C are simultaneously used. From the graph, changes at the time of start and stop in the three appliances can be read.

As the determination information, any information can be used as long as it can be recognized such as information from appliance information storage 7 and displayed on display unit 4 via control circuit 9 or data transferred to an external terminal device (not shown).

Second Embodiment

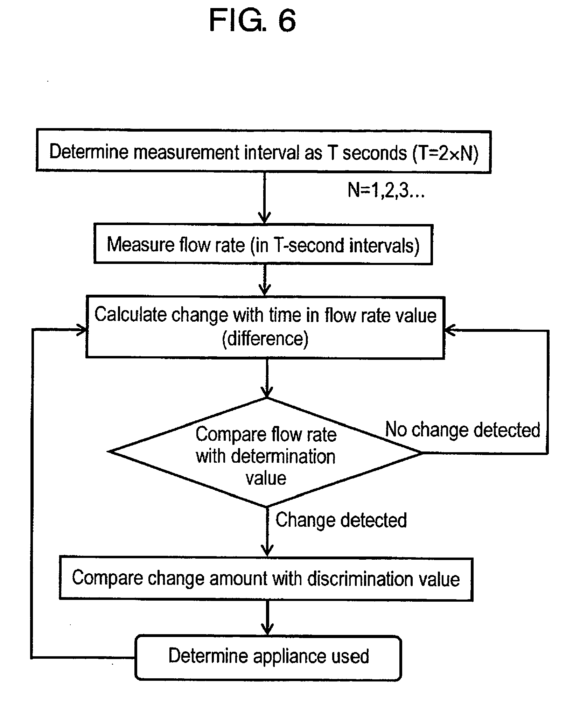

FIG. 6 is a flowchart showing discriminating operation in a second embodiment of the invention. The second embodiment is different from the first embodiment in that the differentiation time of the flow rate value computed by computing unit 6 can be set to integer (N) times of the shortest measurement time interval (two seconds in the first embodiment). The basic configuration and function of flow rate measurement device 1 are similar to those of the first embodiment.

In the second embodiment, the differentiation time in computing unit 6 can be set to integer times of two seconds in accordance with registration. There is a case that the rise time at the time of start is long depending on a gas appliance and, although a change can be detected in the differentiation of two seconds, an appliance corresponding to the change amount cannot be determined due to a change in the flow rate. For such an appliance, discriminating operation is performed while changing the differentiation time according to registration information in appliance information storage 7. As a result, accurate determination can be performed. In the first and second embodiments, the difference is calculated by setting the reference measurement interval as two seconds. However, an appliance can be discriminated even in the case where the reference of the measurement interval and a differential computation is not two seconds.

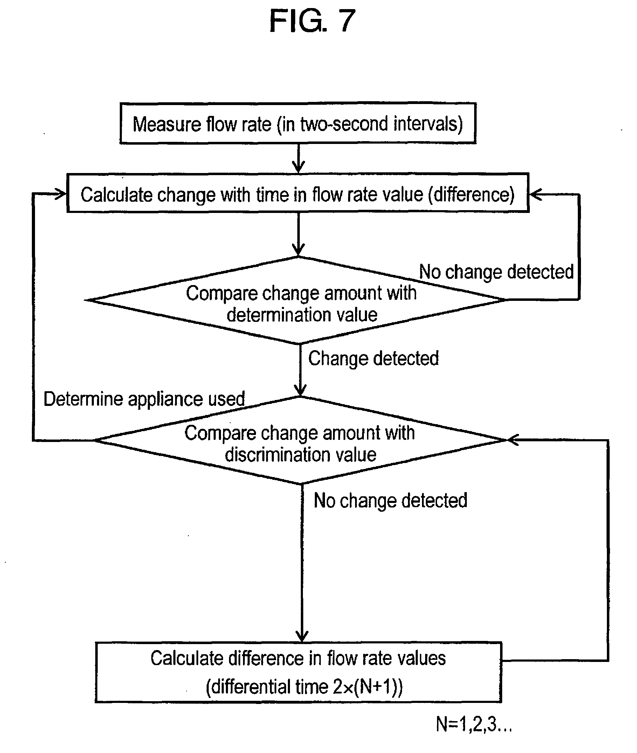

FIG. 7 is another flowchart of the discriminating operation in the second embodiment of the invention. In the flowchart of FIG. 7, when the differential value exceeds a comparison determination value and a state change occurs in a gas appliance, to determine the gas appliance, appliance discriminating unit 8 compares the differential value with each of appliance discrimination values of the gas appliances registered in appliance information storage 7, thereby discriminating the appliance. When there is no matching registered data in the determination, appliance discriminating unit 8 has the function of increasing the differential time and repeating comparison with an increased amount in the differential value until a computation value matching the registered data is obtained. Consequently, even when the appliance data cannot be discriminated by using the two-second-difference, the appliance can be discriminated by automatically increasing the differential time.

Third Embodiment

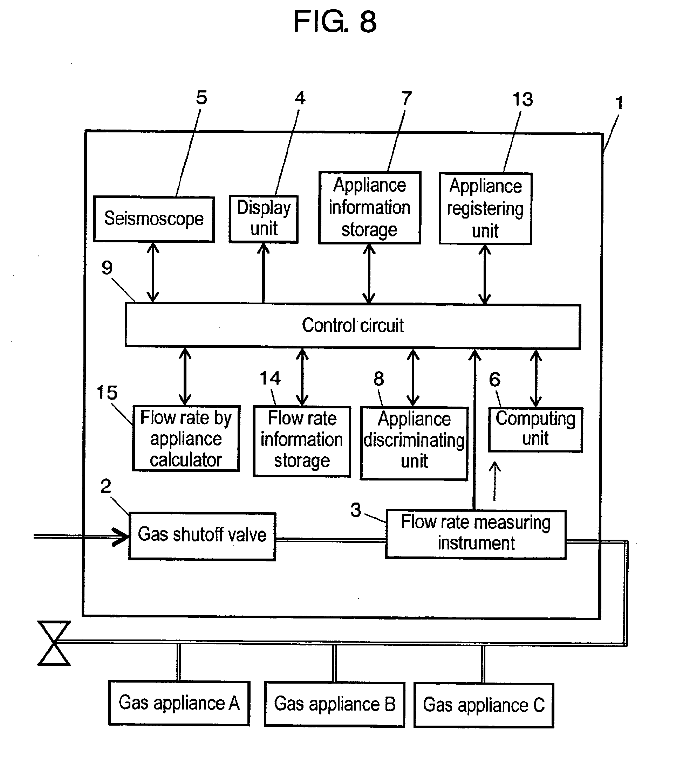

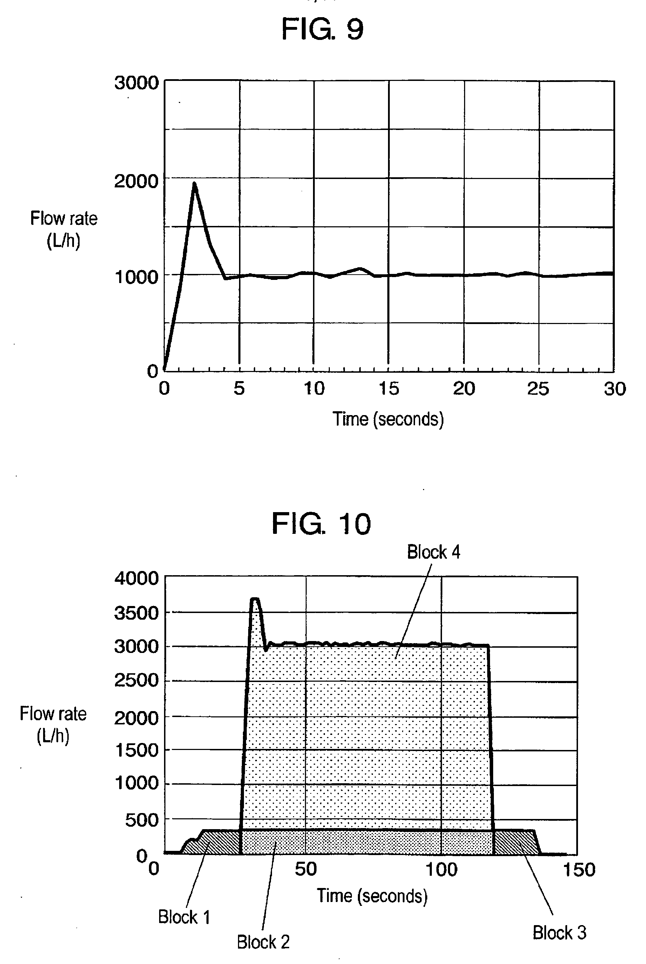

FIG. 8 is a configuration diagram of a flow rate measurement device in a third embodiment of the invention. FIG. 9 is a diagram of flow rate in the flow rate measurement device shown in FIG. 8. The flow rate measurement device in the third embodiment shown in FIG. 8 differs from the first embodiment shown in FIG. 1 in that the flow rate measurement device include flow rate information storage 14 for storing a flow rate value of flow rate measuring instrument 3, and appliance registering unit 13 for registering, as appliance flow rate information, measurement flow rate information measured in predetermined time by flow rate measuring device 3. Since the basic configuration and function of flow rate measurement device 1 are similar to those of the first embodiment, description of this part will not be repeated.

The operations and effects peculiar to the third embodiment will be described below. First, by the operation of appliance discriminating unit 8, the number of operating appliances can be determined. In the third embodiment, determination that only one appliance operates will be described.

For example, when the flow rate measured by flow rate measuring instrument 3 changes from zero (and around zero, zero ±3 L/h) by a predetermined flow rate (for example, 10 L/h or larger), it is determined that one appliance operates. By using a time change in the measurement flow rate as measurement flow rate information, storage starts. The storing operation is continued for predetermined time (for example, 30 seconds), and stored data can be used as time-series flow rate patter data. FIG. 9 shows the stored flow rate pattern data. Although a change from zero has been described, specifically, the change is a change after a state where the zero flow rate continues for a while (for example, 10 seconds or longer).

Immediately after flow rate measurement device 1 is mounted, the operation is continued automatically for a predetermined period from one day to about one week (the setting is changeable). The period is set as a learning period. When appliance discriminating unit 8 determines that only one appliance is used in the learning period, appliance registering unit 13 registers measurement flow rate information of the gas appliance in appliance registering unit 13.

The measurement flow rate information of the time zone in which only one appliance operates is stored and used as appliance flow rate information. To prevent the flow rate information of the same appliance from being stored many times, the measurement flow rate information is learned while making determination from a change in the flow rate at the start of appliance use, an absolute flow rate value, and the like. In such a manner, double registration is prevented. In the case where appliance registering unit 13 automatically operates and registers information, it is difficult to determine a registered appliance, and the kind of the appliance (for example, a water heater, a kitchen range, or the like) is not known. After that, when appliance discriminating unit 8 operates actually, the kind of the appliance is known.

Appliance discriminating unit 8 can be operated as necessary. When the kind of the operating appliance is known, the kind of the appliance (for example, a water heater, a kitchen range, or the like) can be registered in appliance information storage 7. For example, ignition and stop is repeated in order of a kitchen range (a small burner, a large burner, and a grill) and a water gas heater, an operating appliance can be specified. A gas appliance corresponding to the appliance flow rate information as measurement flow rate information is associated in order of the appliances operated. It is also possible to add or update registration data by learning using both a method of automatically providing and registering a learning period and a method of manually operating a predetermined gas appliance and adding or updating the registration data.

Flow-rate-by-appliance calculator 15 calculates the flow rate value of each of appliances discriminated by appliance discriminating unit 8 in accordance with flow rate calculating means registered therein. Since two or more gas appliances are used simultaneously, it is difficult to calculate the flow rate value by appliance. In the third embodiment, the flow rate is obtained by block as shown in FIG. 10, and the flow rates are added by appliance in accordance with the gas appliance based on the change flow rate range of the block.

For example, in the case of the pattern shown in FIG. 10, when it is discriminated from a flow rate change upon start that an appliance is a gas fan heater, the flow rate can be calculated as the flow rate of the gas fan heater in blocks 1, 2, and 3. The flow rate in block 4 is obtained by subtracting the flow rate of the gas fan heater, that is, the flow rate in blocks 1 to 3 from the total flow rate. As another method, there is an estimating method of estimating flow rate based on a predetermined calculation expression from use time. Although the measurement precision varies in any of methods, the appliance is specified by appliance discriminating unit 8 and the flow rate can be obtained by appliance.

Fourth Embodiment

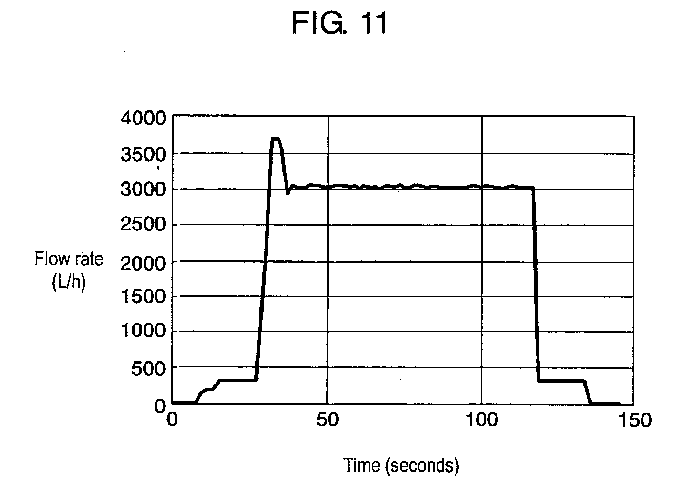

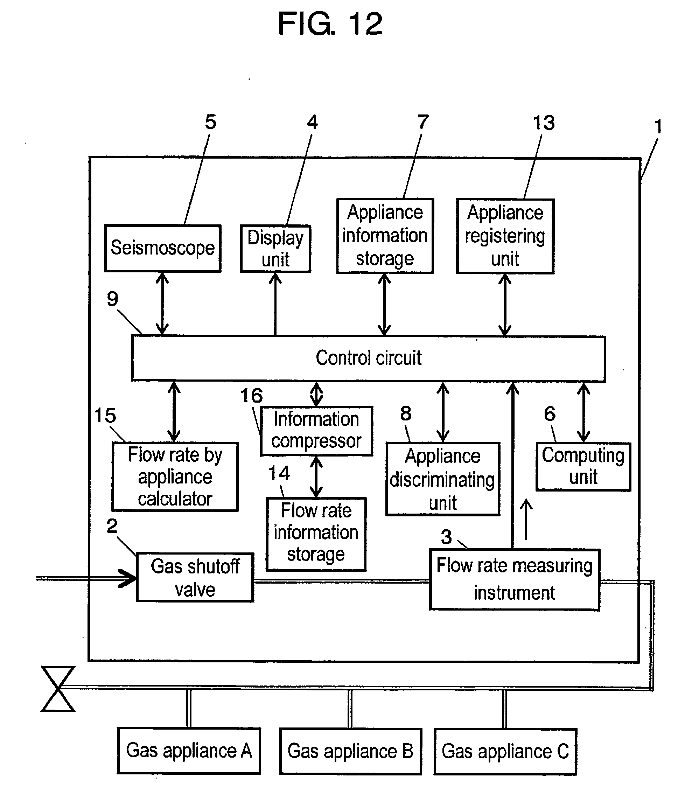

FIG. 11 is a characteristic diagram of a flow rate pattern for explaining data storage of application discriminating unit 8 of flow rate measurement device 1 in a fourth embodiment of the invention. FIG. 12 is a configuration diagram of a flow rate measurement device in the fourth embodiment of the invention. Only the point different from the first embodiment of the fourth embodiment will be described. In FIG. 12, flow rate information storage 14 has an information compressor for information-compressing a flow rate value in the time base direction and storing the compressed information.

In the case of the flow rate pattern data as shown in FIG. 11, information compressor 16 compresses data in the time base direction in an area where flow rate is stable. In the first embodiment, the method of discriminating the flow rate rise pattern has been described. In the fourth embodiment, an appliance is discriminated by data compressed from start of use of an appliance to stop, data at start and end points of compression is registered as information in flow rate information storage 7, and the flow rate of the used appliance is calculated.

In the case where an appliance is used for long time, the data amount becomes enormous. Consequently, the flow rate data in a stable state is omitted and the resultant data is time-compressed, thereby enabling the amount of flow rate data to be reduced. Although flow rate data compressed is a measurement flow rate value of the time-series of a gas meter, the differential flow rate value in predetermined time intervals may be time-compressed.

As obvious from the above, the flow rate measurement device of the invention includes: the flow rate measuring instrument for measuring flow rate in predetermined time intervals; the computing unit for obtaining a differential value of flow rate values output from the flow rate measuring instrument; the appliance information storage; and the appliance determining unit for comparing the differential value calculated by the computing unit with a start determination value registered in the appliance information storage and determining use of an appliance connected downstream of the flow rate measuring instrument. With the configuration, a change in the user state of a gas appliance can be determined at speed corresponding to measurement time of the measuring instrument by a simple algorithm.

The appliance discriminating unit compares the differential value calculated by the computing unit with a plurality of appliance discrimination values registered in the appliance information storage, thereby discriminating a used appliance from the plurality of appliances. With the configuration, the number of appliances operating can be grasped, and the use states of a plurality of appliances can be discriminated.

In the configuration that the computing unit can arbitrarily change time for obtaining the difference of the flow rate values output from the flow rate measuring instrument, by arbitrarily changing the differentiation time, a flow rate change due to gas use of each of the appliances can be properly read according to variations in time of a flow rate change on the appliance unit basis.

When the differential value of the flow rate values output from the flow rate measuring instrument exceeds the start determination value registered in the appliance information storage, the appliance discriminating unit increases differential time calculated by the computing unit until the differential time coincides with the appliance discrimination value registered in the appliance information storage, and discriminates a used appliance based on the matched differential time. With the configuration, a flow rate change in a used gas appliance can be properly read.

The flow rate measurement device according to the invention may further include: the flow rate information storage for storing measurement flow rate information of a flow rate value of the flow rate measuring instrument and measurement time; and the appliance registering unit for registering, as an appliance discrimination value, the measurement flow rate information measured in predetermined time into the appliance information storage. The appliance discrimination value registered in the appliance registering unit is compared with the measurement flow rate information obtained by the flow rate measuring instrument, thereby discriminating a used appliance connected downstream of the flow rate measuring instrument. With the configuration, by storing the measurement flow rate information measured, the use states of the plurality of appliances can be discriminated. By registering kinds of appliances (water heater, kitchen range, and the like) in advance, an appliance to be used can be also specified.

When the appliance discriminating unit determines that one appliance operates, the appliance registering unit may register the measurement flow rate information as predetermined appliance information. In this case, the flow rate information when only one appliance operates can be measured, and accurate information can be registered. Thus, appliance discrimination precision can be improved.

The appliance registering unit can operate as necessary and, in operations of the second time or later, can learn data by adding data to data registered in the past or updating the data registered in the past. With the configuration, by adding data to registered data or by updating the registered data, even when a new appliance is used, the appliance can be discriminated.

The flow rate information storage may have an information compressor for compressing a flow rate value in the time base direction and storing the compressed data. With the configuration, in a case where flow rate fluctuation is small in a stable state, when the feature of an appliance does not appear in a flow rate change or the like, information can be omitted in part and compressed and stored. Therefore, the data amount can be reduced, and the processing load on a microcomputer or the like can be lessened. Thus, the configuration is suitable also for the case where the device operates with a battery.

The flow rate measurement device may further include a flow-rate-by-appliance calculator for calculating flow rate of each of appliances based on a result of the appliance discriminating unit. In this case, by calculating the flow rate by appliance using a result of appliance discrimination, a charge-by-appliance system can be formed in the case of gas appliances. In the case of a plant, the flow rate can be controlled on the appliance unit basis.

The flow rate measuring instrument may use an ultrasonic flow meter as an instantaneous flow rate measurement device. In this configuration, at the moment of a flow rate change, appliance discriminating operation or learning operation can be performed. By finely detecting a flow rate change, the precision by appliance can be improved.

INDUSTRIAL APPLICABILITY

The flow rate measurement device of the present invention can discriminate what kind of an appliance is connected in a passage. Also in the case where a plurality of appliances are used, an appliance used can be known by specifying the appliance from the number of appliances used and the flow rate information. A change in the differential value of an instantaneous flow rate output from the measuring instrument is computed. By the change amount, a change in the use state of a gas appliance is determined. The appliance used can be determined in short time in correspondence with measurement speed of the measuring instrument, and an algorithm of measurement is simpler as compared with the pattern matching of the flow rate. Consequently, increase in the cost requested for discrimination is small. Since attention is paid to the differential value of the flow rate values also for discrimination when a gas appliance operates during another gas appliance is being used, it is easy, the reliability of appliance discrimination improves, and high appliance determination capability can be provided with a simple algorithm. Thus, the invention can provide new services such as setting of gas rates corresponding to appliances used and can optimally change a protection set value in accordance with an appliance used.

**Claims**

1. A flow rate measurement device, comprising:

   a flow rate measuring instrument (3) for measuring flow rate in predetermined time intervals;
   a computing unit (6) for obtaining a differential value of flow rate values output from the flow rate measuring instrument (3);
   an appliance information storage (7); and
   an appliance discriminating unit (8) for comparing the differential value calculated by the computing unit (6) with a start determination value registered in the appliance information storage (7) and determining use of an appliance (A, B, C) connected downstream of the flow rate measuring instrument (3), **characterized in that** said computing unit (6) is configured to arbitrarily change time for obtaining the difference of the flow rate values output from the flow rate measuring instrument (3).

2. The flow rate measurement device according to claim 1, wherein the appliance discriminating unit is configured to compare the differential value calculated by the computing unit with a plurality of appliance discrimination values registered in the appliance information storage, thereby discriminating a used appliance from the plurality of appliances.

3. The flow rate measurement device according to claim 2, which is configured so, that when the differential value of the flow rate values output from the flow rate measuring instrument exceeds the start determination value registered in the appliance information storage, the appliance discriminating unit increases differential time calculated by the computing unit until the differential time coincides with the appliance discrimination value registered in the appliance information storage, and discriminates a used appliance based on the matched differential time.

4. The flow rate measurement device according to claim 1, further comprising:

   a flow rate information storage for storing measurement flow rate information of a flow rate value of the flow rate measuring instrument and measurement time; and
   an appliance registering unit for registering, as an appliance discrimination value, the measurement flow rate information measured in predetermined time into the appliance information storage,
   wherein the appliance discrimination value registered in the appliance registering unit is compared with the measurement flow rate information obtained by the flow rate measuring instrument, thereby discriminating a used appliance connected downstream of the flow rate measuring instrument.

5. The flow rate measurement device according to claim 4, which is configured so, that when the appliance discriminating unit determines that one appliance operates, the appliance registering unit registers the measurement flow rate information as predetermined appliance information.

6. The flow rate measurement device according to claim 4, wherein the appliance registering unit is configured to operate as necessary and, in operations of the second time or later, is configured to learn by adding data to data registered in the past or updating the data registered in the past.

7. The flow rate measurement device according to claim 4, wherein the flow rate information storage has an information compressor for compressing a flow rate value in the time base direction and storing the compressed data.

8. The flow rate measurement device according to claim 1, further comprising a flow-rate-by-appliance calculator for calculating flow rate of each of appliances based on a result of the appliance discriminating unit.

9. The flow rate measurement device according to claim 1, wherein the flow rate measuring instrument uses an ultrasonic flow meter as an instantaneous flow rate measurement device.

**Patentansprüche**

1. Fließgeschwindigkeitsmessvorrichtung, umfassend:

   ein Fließgeschwindigkeitsmessinstrument (3) zum Messen von Fließgeschwindigkeit in vorgegebenen Zeiträumen;
   eine Recheneinheit (6) zum Erhalten eines Differentialwerts von Fließgeschwindigkeitswerten, die von dem Fließgeschwindigkeitsmessinstrument (3) ausgegeben sind;
   einen Geräteinformationsspeicher (7); und
   eine Geräteunterscheidungseinheit (8) zum Vergleichen des Differentialwerts, der durch die Recheneinheit (6) berechnet ist, mit einem Anfangsbestimmungswert, der in dem Geräteinformationsspeicher (7) registriert ist, und Bestimmen der Benutzung eines Geräts (A, B, C), das dem Fließgeschwindigkeitsmessinstrument (3) nachgeschaltet verbunden ist, **dadurch gekennzeichnet, dass** die Recheneinheit (6) zum willkürlichen Ändern der Zeit zum Erhalten des Unterschieds der Fließgeschwindigkeitswerte konfiguriert ist, die von dem Fließgeschwindigkeitsmessinstrument (3) ausgegeben sind.

2. Fließgeschwindigkeitsmessvorrichtung nach Anspruch 1, wobei die Geräteunterscheidungseinheit zum Vergleichen des Differentialwerts, der durch die Recheneinheit berechnet ist, mit mehreren Geräteunterscheidungswerten konfiguriert ist, die in dem Geräteinformationsspeicher registriert sind, wodurch ein benutztes Gerät von den mehreren Geräten unterschieden ist.

3. Fließgeschwindigkeitsmessvorrichtung nach Anspruch 2, die derart konfiguriert ist, dass die Geräteunterscheidungseinheit, wenn der Differentialwert der Fließgeschwindigkeitswerte, die von dem Fließgeschwindigkeitsmessinstrument ausgegeben sind, den Anfangsbestimmungswert übersteigt, der in dem Geräteinformationsspeicher registriert ist, Differentialzeit erhöht, die von der Recheneinheit berechnet ist, bis die Differentialzeit mit dem Geräteunterscheidungswert übereinstimmt, der in dem Geräteinformationsspeicher registriert ist, und ein benutztes Gerät auf Grundlage der angepassten Differentialzeit unterscheidet.

4. Fließgeschwindigkeitsmessvorrichtung nach Anspruch 1, ferner umfassend:

   einen Fließgeschwindigkeitsinformationsspeicher zum Speichern von Messfließgeschwindigkeitsinformation eines Fließgeschwindigkeitswerts des Fließgeschwindigkeitsmessinstruments und von Messzeit; und
   eine Geräteregistriereinheit zum Registrieren der Messfließgeschwindigkeitsinformation, die in vorgegebener Zeit gemessen ist, als Geräteunterscheidungswert in dem Geräteinformationsspeicher,
   wobei der Geräteunterscheidungswert, der in der Geräteregistriereinheit registriert ist, mit der Messfließgeschwindigkeitsinformation verglichen wird, die durch das Fließgeschwindigkeitsmessinstrument erhalten ist, wodurch ein benutztes Gerät unterschieden ist, das dem Fließgeschwindigkeitsmessinstrument nachgeschaltet verbunden ist.

5. Fließgeschwindigkeitsmessvorrichtung nach Anspruch 4, die derart konfiguriert ist, dass die Geräteregistriereinheit, wenn die Geräteunterscheidungseinheit bestimmt, dass ein Gerät arbeitet, die Messfließgeschwindigkeitsinformation als vorgegebene Geräteinformation registriert.

6. Fließgeschwindigkeitsmessvorrichtung nach Anspruch 4, wobei die Geräteregistriereinheit zum Betrieb nach Bedarf konfiguriert ist und bei Betrieben des zweiten Mals oder später zum Lernen durch Hinzufügen von Daten zu Daten, die in der Vergangenheit registriert wurden, oder Aktualisieren der Daten, die in der Vergangenheit registriert wurden, konfiguriert ist.

7. Fließgeschwindigkeitsmessvorrichtung nach Anspruch 4, wobei der Fließgeschwindigkeitsinformationsspeicher einen Informationskompressor zum Komprimieren eines Fließgeschwindigkeitswerts in der Zeitbasisrichtung und Speichern der komprimierten Daten aufweist.

8. Fließgeschwindigkeitsmessvorrichtung nach Anspruch 1, ferner umfassend eine Fließgeschwindigkeit/Geräte-Rechenvorrichtung zum Berechnen der Fließgeschwindigkeit eines jeden Geräts auf Grundlage eines Ergebnisses der Geräteunterscheidungseinheit.

9. Fließgeschwindigkeitsmessvorrichtung nach Anspruch 1, wobei das Fließgeschwindigkeitsmessinstrument einen Ultraschalldurchflussmesser als verzögerungsfreie Fließgeschwindigkeitsmessvorrichtung nutzt.

## Revendications

1. Dispositif de mesure de débit, comprenant :

un instrument de mesure de débit (3) pour mesurer un débit à intervalles de temps prédéterminés ;
une unité de calcul (6) pour obtenir une valeur différentielle de valeurs de débits délivrées en sortie de l'instrument de mesure de débit (3) ;
un stockage (7) d'informations d'appareil, et
une unité de discrimination d'appareil (8) pour comparer la valeur différentielle calculée par l'unité de calcul (6) à une valeur de détermination de débit enregistrée dans le stockage (7) d'informations d'appareil et déterminer l'utilisation d'un appareil (A, B, C) relié en aval de l'instrument de mesure de débit (3), **caractérisé en ce que** ladite unité de calcul (6) est configurée pour modifier de façon arbitraire le moment de l'obtention de la différence des valeurs de débits délivrées en sortie de l'instrument de mesure de débit (3).

2. Dispositif de mesure de débit selon la revendication 1, dans lequel l'unité de discrimination d'appareil est configurée pour comparer la valeur différentielle calculée par l'unité de calcul à une pluralité de valeurs de discrimination d'appareil enregistrées dans le stockage d'informations d'appareil, distinguant ainsi un appareil utilisé parmi la pluralité d'appareils.

3. Dispositif de mesure de débit selon la revendication 2, qui est configuré de sorte que, lorsque la valeur différentielle des valeurs de débits délivrées en sortie de l'instrument de mesure de débit dépasse la valeur de détermination de débit enregistrée dans le stockage d'informations d'appareil, l'unité de discrimination d'appareil augmente le temps différentiel calculé par l'unité de calcul jusqu'à ce que le temps différentiel coïncide avec la valeur de discrimination d'appareil enregistrée dans le stockage d'informations d'appareil, et distingue un appareil utilisé en fonction du temps différentiel correspondant.

4. Dispositif de mesure de débit selon la revendication 1, comprenant en outre :

un stockage d'informations de débit pour stocker des informations de débit de mesure d'une valeur de débit de l'instrument de mesure de débit et d'un temps de mesure ; et
une unité d'enregistrement d'appareil pour enregistrer, comme valeur de discrimination d'appareil, les informations du débit de mesure mesurées en un temps prédéterminé dans le stockage d'informations d'appareil,
dans lequel la valeur de discrimination d'appareil enregistrée dans l'unité d'enregistrement d'appareil est comparée aux informations de débit de mesure obtenues par l'instrument de mesure de débit, distinguant ainsi un appareil utilisé relié en aval à l'instrument de mesure de débit.

5. Dispositif de mesure de débit selon la revendication 4, qui est configuré de sorte que, lorsque l'unité de discrimination d'appareil détermine qu'un appareil fonctionne, l'unité d'enregistrement d'appareil enregistre les informations de débit de mesure en tant qu'informations d'appareil prédéterminées.

6. Dispositif de mesure de débit selon la revendication 4, dans lequel l'unité d'enregistrement d'appareil est configurée pour fonctionner comme il faut et, dans des opérations du deuxième compteur ou après, est configurée pour apprendre en ajoutant des données aux données enregistrées dans le passé ou actualiser les données enregistrées dans le passé.

7. Dispositif de mesure de débit selon la revendication 4, dans lequel le stockage des informations de débit a un compresseur d'informations pour compresser une valeur de débit dans la direction de base de temps et stocker les données compressées.

8. Dispositif de mesure de débit selon la revendication 1, comprenant en outre un calculateur de débit par appareil pour calculer un débit de chacun des appareils sur la base de l'unité de discrimination d'appareil.

9. Dispositif de mesure de débit selon la revendication 1, dans lequel l'instrument de mesure de débit utilise un débitmètre à ultrasons comme dispositif de mesure de débit instantané.

# FIG. 1

# FIG. 2

# FIG. 3

| Measure flow rate (in two-second intervals) |

Calculate change with time in flow rate value (difference)

Compare flow rate with determination value → No change detected

Change detected

Compare differential value with discrimination value

Determine appliance used

## FIG. 4

Flow rate (L/h)

Differential value (L)

Start     Seconds     Stop

——— Flow rate
— — — Differential value

## FIG. 5

Start of appliance A

Start of appliance C

Start of appliance B    Stop of appliance A

Flow rate (L/h)

Differential value (L)

Stop of appliance B

Stop of appliance C

Seconds

——— Compound flow rate
············· Differential value

# FIG. 6

```
┌────────────────────────────────────────────────┐
│ Determine measurement interval as T seconds (T=2×N) │
└────────────────────────────────────────────────┘
                        N=1,2,3...
                        │
                        ▼
        ┌────────────────────────────────────┐
        │ Measure flow rate (in T-second intervals) │
        └────────────────────────────────────┘
                        │
                        ▼
    ┌────────────────────────────────────────────┐
    │ Calculate change with time in flow rate value │
    │                (difference)                  │
    └────────────────────────────────────────────┘
                        │
                        ▼
                  ╱─────────────╲          No change detected
                 ╱ Compare flow rate ╲──────────────────────▶
                 ╲ with determination ╱
                  ╲     value      ╱
                   ╲─────────────╱
                        │ Change detected
                        ▼
    ┌────────────────────────────────────────────┐
    │ Compare change amount with discrimination value │
    └────────────────────────────────────────────┘
                        │
                        ▼
        ┌────────────────────────────────┐
        │     Determine appliance used     │
        └────────────────────────────────┘
```

# FIG. 7

```
┌─────────────────────────────────────────────────────┐
│ Measure flow rate (in two-second intervals)          │
└─────────────────────────────────────────────────────┘
                        │
                        ▼
┌─────────────────────────────────────────────────────┐
│ Calculate change with time in flow rate value (difference) │
└─────────────────────────────────────────────────────┘
```

Compare change amount with determination value

No change detected

Change detected

Determine appliance used

Compare change amount with discrimination value

No change detected

Calculate difference in flow rate values
(differential time 2×(N+1))

N=1,2,3...

# FIG. 8

## FIG. 9

Flow rate (L/h)

Time (seconds)

## FIG. 10

Block 4

Flow rate (L/h)

Time (seconds)

Block 1

Block 2

Block 3

# FIG. 11

# FIG. 12

# FIG. 13

# FIG. 14

| T1 | T2 | T3 | T4 | T5 | Q1 | Q2 | Q3 | Q4 | Q5 |
|----|----|----|----|----|----|----|----|----|----|
| 2.5 | 4.5 | 13 | - | - | 43 | 145 | 205 | - | - |

Pattern table

**EP 1 881 304 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007071421 A
- JP 2003149027 A

- US 6625549 B